# EUROPEAN PATENT APPLICATION

(11) **EP 4 701 150 A1**
(43) Date of publication of application: **25.02.2026**
(21) Application number: 23939542.9
(22) Date of filing: 29.05.2023
(51) Int. Cl.: H04L 43/04

(54) **MONITORING DEVICE, NETWORK MONITORING SYSTEM, MONITORING METHOD, AND MONITORING PROGRAM**

(71) Applicant: MITSUBISHI ELECTRIC CORPORATION, Chiyoda-ku Tokyo 100-8310 (JP)
(72) Inventor: MATSUSHITA, Ryuma, Tokyo 100-8310 (JP); TANIGUCHI, Sachiko, Tokyo 100-8310 (JP)
(74) Representative: Pfenning, Meinig & Partner mbB
(86) International application number: PCT/JP2023/019972
(87) International publication number: WO 2024/247063

(57) **Abstract**

A network monitoring apparatus (100) includes a learning unit (132), an anomaly degree calculation unit (134), and a hyperparameter search unit (136). The learning unit (132) generates, as a new cluster, a cluster corresponding to partial time series data including data that is more recent in a time series than data included in partial time series data corresponding to any of one or more existing clusters among monitoring data. The anomaly degree calculation unit (134) calculates an anomaly degree corresponding to the new cluster based on a distance between the new cluster and the one or more existing clusters. The hyperparameter search unit (136) searches for a hyperparameter in a clustering process based on an evaluation index corresponding to a normal period during which no anomaly has been detected in a target device.

## Description

### Technical Field

The present disclosure relates to a monitoring apparatus, a network monitoring system, a monitoring method, and a monitoring program.

### Background Art

As a conventional method for detecting anomalies in time series data, there is a method using a prediction model of machine learning. This method detects anomalies in data by predicting an actual measurement value at a next time point from actual measurement values over a certain period of time in the past, and calculating an anomaly degree based on a divergence between the predicted actual measurement value and an actual measurement value that is actually measured. In order to obtain a highly accurate anomaly degree, it is necessary to predict actual measurement values at normal times with high accuracy. Therefore, in learning of the prediction model, prediction errors are used as an index to determine the quality of the prediction model. That is, also when hyperparameters of the prediction model are to be determined, hyperparameters that minimize prediction errors of actual measurement values at normal times are searched for, so as to generate the prediction model with high anomaly detection accuracy.

On the other hand, as a conventional method for detecting anomalies in time series data, there is also an anomaly detection method using a clustering method. This method calculates an anomaly degree based on the distance between an input value and the center of an existing cluster. As a method derived from the clustering method, there is also an online clustering method that can forget old learning information and sequentially learn new input information. The online clustering method is a useful method in cases where relearning of an anomaly detection model is required after the start of operation.

### Citation List

### Patent Literature

Patent Literature 1: JP 2022-035686 A

### Summary of Invention

### Technical Problem

Even in the clustering method, in order to obtain a highly accurate anomaly detection model, it is necessary to adjust hyperparameters, and an index for adjustment is required. While there is a clear index, which is prediction errors, in adjustment of hyperparameters of a prediction model, there is no clear index in the clustering method.

Patent Literature 1 discloses a technology that uses the accuracy, recall, precision rate, F-measure, and Area Under the Curve (AUC) of anomaly detection as indices for adjusting hyperparameters of an anomaly diagnosis model. However, with the indices that require correct labels, an anomaly detection model cannot be updated in real time to follow changes in the state of a system after the start of operation.

An object of the present disclosure is, in an anomaly detection method for time series data using a clustering method, to reduce the effort required to update an anomaly detection model after the start of operation by automating learning of the anomaly detection model and adjustment of hyperparameters of the anomaly detection model, using an index that is not based on correct labels as an evaluation index.

### Solution to Problem

A monitoring apparatus according to the present disclosure includes
a learning unit to perform clustering on monitoring data, which is time series data corresponding to a target device, according to a first hyperparameter, and when one or more clusters corresponding to one or more pieces of partial time series data included in the monitoring data have been generated as one or more existing clusters, generate, as a new cluster, a cluster corresponding to partial time series data including data that is more recent in a time series than data included in partial time series data corresponding to any of the one or more existing clusters among the monitoring data;
an anomaly degree calculation unit to calculate an anomaly degree corresponding to the new cluster based on a distance between the new cluster and the one or more existing clusters; and
a hyperparameter search unit to search for the first parameter based on an evaluation index when an anomaly degree corresponding to each piece of partial time series data included in the monitoring data has been calculated, the evaluation index being an index that corresponds to the anomaly degree corresponding to each piece of partial time series data and corresponds to a normal period, which is a continuous period during which no anomaly has been detected in the target device.

### Advantageous Effects of Invention

According to the present disclosure, a learning unit performs clustering on monitoring data, which is time series data, according to a first hyperparameter. An anomaly degree calculation unit calculates an anomaly degree based on a distance between clusters. A hyperparameter search unit searches for the first hyperparameter based on an evaluation index corresponding to a normal period. Therefore, according to the present disclosure, in an anomaly detection method for time series data using a clustering method, the effort required to update an anomaly detection model after the start of operation can be reduced by automating learning of the anomaly detection model and adjustment of hyperparameters of the anomaly detection model, using an index that is not based on correct labels as an evaluation index.

### Brief Description of Drawings

Fig. 1 is a diagram illustrating an example of the configuration of a network monitoring system 90 according to Embodiment 1.
Fig. 2 is a diagram illustrating an example of the functional configuration of a network monitoring apparatus 100 according to Embodiment 1.
Fig. 3 is a diagram describing processing by an anomaly degree calculation unit 134 according to Embodiment 1.
Fig. 4 is a diagram illustrating an example of the hardware configuration of the network monitoring apparatus 100 according to Embodiment 1.
Fig. 5 is a flowchart illustrating processing by a monitoring data processing unit 130 according to Embodiment 1.
Fig. 6 is a diagram describing processing by the monitoring data processing unit 130 according to Embodiment 1.
Fig. 7 is a flowchart illustrating processing by a hyperparameter search unit 136 according to Embodiment 1.
Fig. 8 is a diagram illustrating an example of the hardware configuration of the network monitoring apparatus 100 according to a variation of Embodiment 1.
Fig. 9 is a diagram illustrating an example of the configuration of the network monitoring system 90 according to Embodiment 2.
Fig. 10 is a diagram illustrating an example of the functional configuration of the network monitoring apparatus 100 according to Embodiment 2.
Fig. 11 is a diagram illustrating an example of the functional configuration of a network device 200 according to Embodiment 2.
Fig. 12 is a diagram illustrating an example of the configuration of the network monitoring system 90 according to Embodiment 3.
Fig. 13 is a diagram illustrating an example of the functional configuration of the network monitoring apparatus 100 according to Embodiment 3.
Fig. 14 is a diagram illustrating an example of the functional configuration of the network device 200 according to Embodiment 3.

### Description of Embodiments

In the description and drawings of the embodiments, the same reference numerals are assigned to the same elements and corresponding elements. Description of elements with the same reference numerals are omitted or simplified as appropriate. Arrows in diagrams mainly indicate flows of data or flows of processing. "Unit" may be interpreted as "circuit", "step", "procedure", "process", or "circuitry" as appropriate.

### Embodiment 1.

This embodiment will be described in detail below with reference to the drawings.

### *** Description of Configuration ***

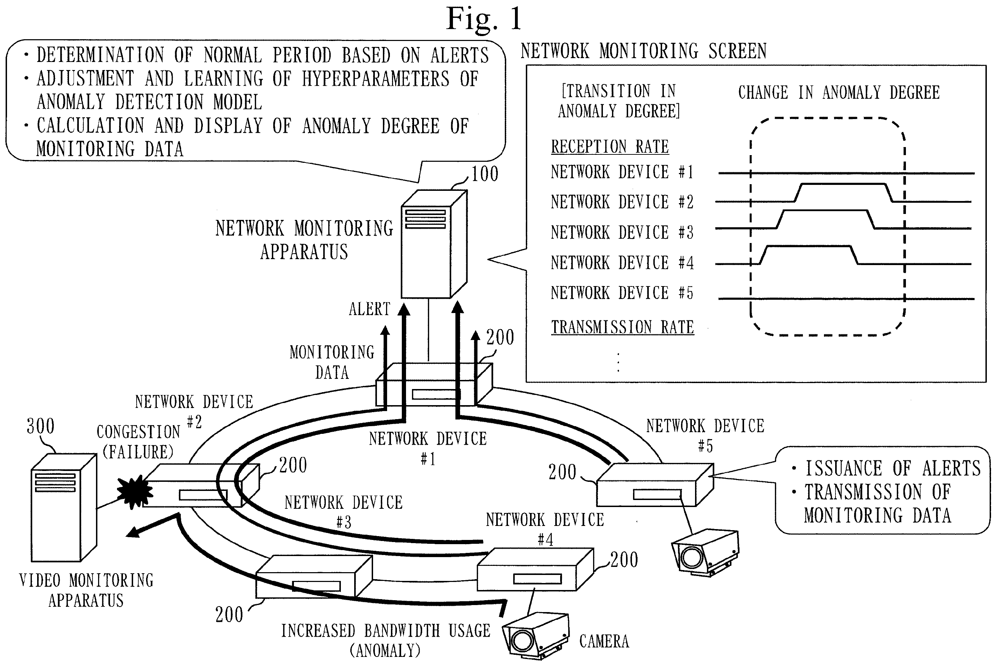

Fig. 1 illustrates an example of the configuration of a network monitoring system 90 according to Embodiment 1. As illustrated in Fig. 1, the network monitoring system 90 includes a network monitoring apparatus 100, one or more network devices 200, and a video monitoring apparatus 300. The network monitoring apparatus 100 and the network device 200 are collectively referred to as a monitoring apparatus. The network monitoring apparatus 100 and the network device 200 are connected so as to be able to communicate with each other as appropriate. Two or more apparatuses included in the network monitoring system 90 may be configured integrally.

In this example, the network monitoring apparatus 100 monitors monitoring data transmitted by each network device 200.

The video monitoring apparatus 300 monitors video captured by each camera. In the network monitoring system 90, data acquired by devices other than cameras may be communicated.

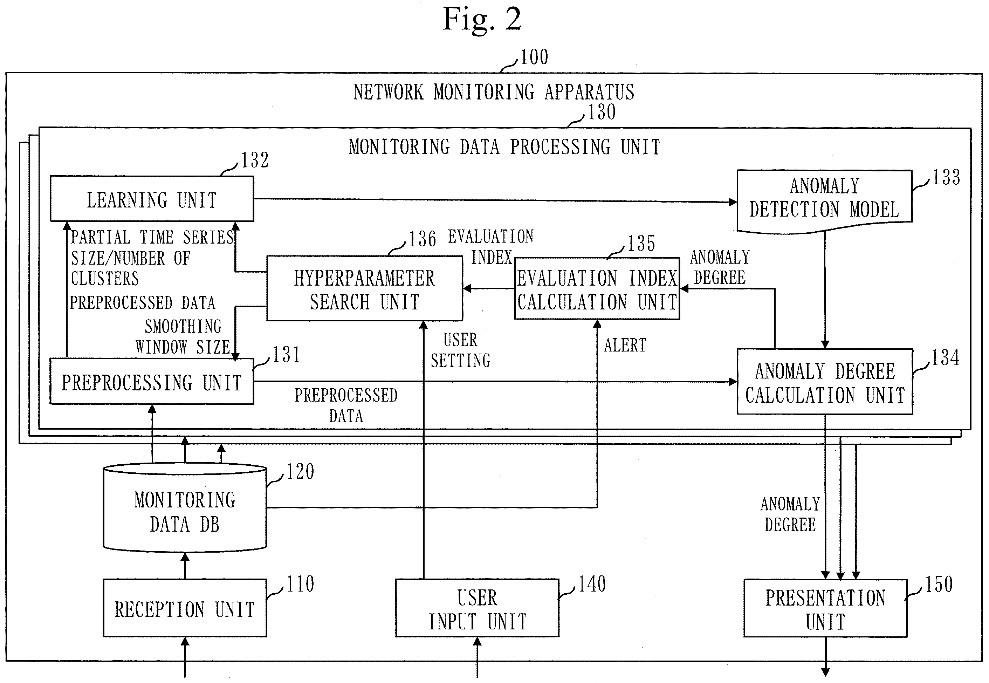

Fig. 2 illustrates an example of the functional configuration of the network monitoring apparatus 100. As illustrated in Fig. 2, the network monitoring apparatus 100 includes a reception unit 110, a monitoring data database (DB) 120, a monitoring data processing unit 130, a user input unit 140, and a presentation unit 150.

The reception unit 110 receives monitoring data corresponding to each network device 200. The reception unit 110 may receive monitoring data from each network device 200, or may receive monitoring data from a database or the like in which monitoring data corresponding to each network device 200 is aggregated.

As a specific example, monitoring data is time series data, and includes data indicating an alert issued by the network device 200, transmission and reception rates at each port of the network device 200, and so on. The dimension of monitoring data may be any dimension. There may be a plurality of sets of monitoring data. As a specific example, each set of monitoring data is data of each network device 200. There may be a plurality of sets of monitoring data corresponding to one network device 200. Monitoring data is also called network monitoring data.

The monitoring data received by the reception unit 110 is accumulated in the monitoring data DB 120. The monitoring data DB 120 is a database to accumulate monitoring data.

The monitoring data processing unit 130 includes a preprocessing unit 131, a learning unit 132, an anomaly detection model 133, an anomaly degree calculation unit 134, an evaluation index calculation unit 135, and a hyperparameter search unit 136. The network monitoring apparatus 100 includes the monitoring data processing unit 130 for each set of monitoring data.

The preprocessing unit 131 retrieves monitoring data from the monitoring data DB 120, and performs a smoothing process and a trend removal process on the retrieved monitoring data as preprocessing so as to generate preprocessed data. The smoothing process is a process of smoothing time series data using a smoothing window size determined by the hyperparameter search unit 136. The smoothing window is also called a moving window. The trend removal process is a process of removing a trend from time series data. The preprocessed data is data generated by performing the preprocessing on the monitoring data. That is, as a specific example, the preprocessing is composed of the smoothing process of smoothing the monitoring data and the trend removal process of removing a trend from the monitoring data.

The preprocessing unit 131 passes the generated preprocessed data to the learning unit 132 and the anomaly degree calculation unit 134.

The learning unit 132 performs a clustering process on the preprocessed data received from the preprocessing unit 131 using a partial time series size and the number of clusters that are determined by the hyperparameter search unit 136. The partial time series size is the size of data to be cut out from time series data and the size of partial time series data.

As a specific example, in the clustering process, the learning unit 132 sequentially uses sections of the received preprocessed data as clustering targets starting from the oldest section, sequentially generates clusters corresponding to the clustering targets, and sequentially includes data indicating the generated clusters into the anomaly detection model 133. The oldest section is determined according to the date and time corresponding to each section of the preprocessed data. That is, the most recent clustering target includes a section that is more recent in a time series than sections included in clustering targets corresponding to any existing clusters. An existing cluster is each cluster indicated by the anomaly detection model 133. Each cluster corresponds to partial time series data. The learning unit 132 may use a cluster division criterion determined by the hyperparameter search unit 136 instead of the number of clusters. The preprocessed data is data generated by performing the preprocessing on the monitoring data using a second hyperparameter. As a specific example, the second hyperparameter indicates the smoothing window size in the smoothing process.

That is, the learning unit 132 performs clustering on monitoring data, which is time series data corresponding to a target device, according to a first hyperparameter. When one or more clusters corresponding to one or more pieces of partial time series data included in the monitoring data have been generated as one or more existing clusters, the learning unit 132 generates, as a new cluster, a cluster corresponding to partial time series data including data that is more recent in a time series than data included in partial time series data corresponding to any of the one or more existing clusters in the monitoring data. The target device is, as a specific example, the network device 200. As a specific example, the first hyperparameter indicates at least one of the size of partial time series data and a parameter related to division into clusters. As a specific example, the parameter related to division into clusters indicates one of the number of clusters and the cluster division criterion. Each of the first hyperparameter and the second hyperparameter corresponds to a hyperparameter of the anomaly detection model 133.

As a result of the clustering process, the anomaly detection model 133 is generated. The anomaly detection model 133 is also called a learning model and is data indicating each cluster generated by the clustering process, as a specific example. The data indicating each cluster may be data indicating each cluster itself, or may be data indicating an outline of each cluster, such as the center or center of gravity of each cluster. Basically, the anomaly detection model 133 is empty at the start of processing by the learning unit 132.

The anomaly degree calculation unit 134 calculates an anomaly degree using the preprocessed data received from the preprocessing unit 131 and the anomaly detection model 133. At this time, as a specific example, the anomaly degree calculation unit 134 calculates an anomaly degree corresponding to the new cluster based on the distance between the new cluster and one or more existing clusters. The anomaly degree corresponding to the new cluster may be a value indicating the distance between the new cluster and the one or more existing clusters. The distance between the new cluster and the one or more existing clusters may be the distance between the new cluster and an existing cluster closest to the new cluster among the one or more existing clusters.

As a specific example, in the calculation of an anomaly degree, when clusters have been sequentially generated in the clustering process, the distance between the center of the new cluster and the center of each of all the existing clusters is calculated, and the minimum distance among the calculated distances is determined to be the anomaly degree corresponding to the new cluster. The new cluster is a cluster generated most recently. As the distance between clusters, the anomaly degree calculation unit 134 may adopt the distance between the centers of gravity of clusters, the distance between representative points within clusters, or the like.

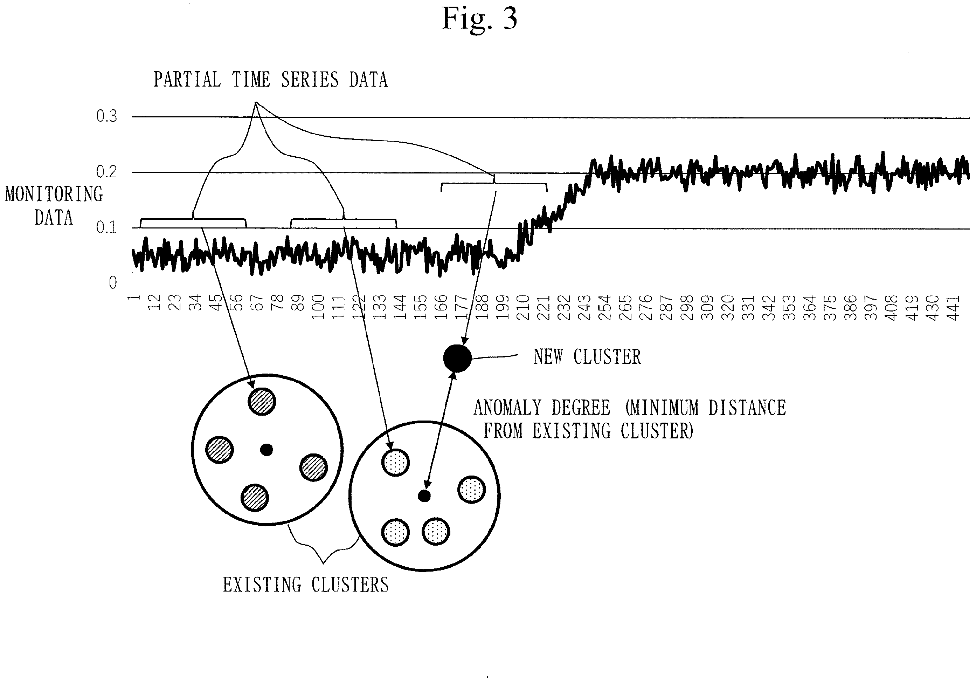

Fig. 3 is a diagram describing the center of the new cluster and an anomaly degree calculation process. As illustrated in Fig. 3, the anomaly degree calculation unit 134 determines the minimum distance among the distances between the center of the new cluster and the centers of all the existing clusters to be the anomaly degree.

The user input unit 140 receives input of a search range and the number of searches for a hyperparameter, and passes data indicating the received search range and number of searches to the hyperparameter search unit 136.

The evaluation index calculation unit 135 refers to the monitoring data DB 120, extracts a period during which no alert has been issued, namely a normal period, and calculates an evaluation index for hyperparameters in the extracted normal period. As a specific example, the evaluation index for hyperparameters in the normal period is composed of at least one of the average and variance of the anomaly degree in the normal period. An alert is, as a specific example, data indicating that an anomaly has occurred in the network device 200. The evaluation index is an index based on the assumption that the average and variance of the anomaly degree in the normal period become relatively small. Other evaluation indices may be used, provided that it is an index that contributes to making the average and variance of the anomaly degree in the normal period relatively small when searching for a hyperparameter.

The hyperparameter search unit 136 searches for a hyperparameter that minimizes the evaluation index calculated by the evaluation index calculation unit 135 within the search range specified by the user input unit 140 the number of times equal to the number of searches specified by the user input unit 140. The hyperparameter that the hyperparameter search unit 136 has found may not actually be a globally optimal solution. That is, the hyperparameter that minimizes the evaluation index is a hyperparameter that is searched for under the constraints of the specified search range and number of searches, and may be a relatively good hyperparameter.

That is, the hyperparameter search unit 136 searches for the first parameter based on an evaluation index when an anomaly degree corresponding to each piece of partial time series data included in the monitoring data has been calculated. The evaluation index is an index that corresponds to the anomaly degree corresponding to each piece of partial time series data and corresponds to a normal period. The normal period is a continuous period during which no anomaly has been detected in the target device.

As a specific example, the hyperparameter search unit 136 searches for a hyperparameter using Bayesian optimization.

The hyperparameter search unit 136 may search for the second hyperparameter based on the evaluation index.

The presentation unit 150 displays, for each set of monitoring data, the anomaly degree calculated by the anomaly degree calculation unit 134 on a screen included in the network monitoring apparatus 100. The network monitoring screen illustrated in Fig. 1 indicates a specific example of a display image of anomaly degrees.

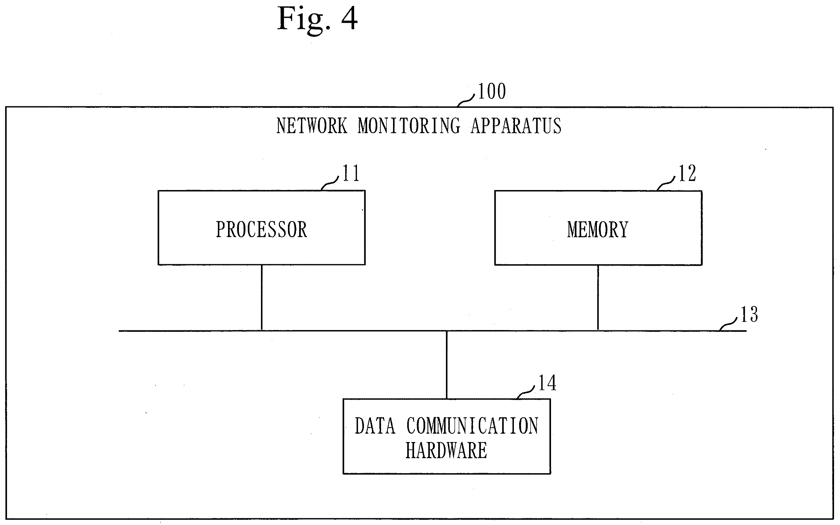

Fig. 4 illustrates an example of the hardware configuration of the network monitoring apparatus 100 according to this embodiment. The network monitoring apparatus 100 is composed of a computer. The network monitoring apparatus 100 may be composed of a plurality of computers.

As illustrated in Fig. 4, the network monitoring apparatus 100 is a computer that includes hardware such as a processor 11, a memory 12, and data communication hardware 14. These hardware components are appropriately connected via a bus 13.

The processor 11 is an integrated circuit (IC) that performs operational processing, and controls the hardware included in the computer. The processor 11 is, as a specific example, a central processing unit (CPU), a digital signal processor (DSP), a system large scale integration (LSI), or a graphics processing unit (GPU).

The network monitoring apparatus 100 may include a plurality of processors as an alternative to the processor 11. The plurality of processors share the role of the processor 11.

The memory 12 is, as a specific example, a non-volatile or volatile semiconductor memory, such as a random access memory (RAM), a read only memory (ROM), a flash memory, an erasable programmable read only memory (EPROM), or an electrically erasable programmable read-only memory (EEPROM), or may be a magnetic disk, a flexible disk, an optical disc, a compact disc, a mini disc, a digital versatile disc (DVD), or the like.

The reception unit 110 is realized by the data communication hardware 14.

The network monitoring data DB 120, the network monitoring data processing unit 130, the user input unit 140, and the presentation unit 150 (the four functional blocks are hereafter referred to as a data processing unit) are realized by hardware, software, firmware, or a combination of these.

Software and firmware are described as programs and are stored in the memory 12. When the data processing unit is realized by software or firmware, the data processing unit is realized by the processor 11 reading programs for operating as the functional blocks of the data processing unit from the memory 12 and executing the programs. That is, the network monitoring apparatus 100 includes the memory 12 to store the programs that cause steps to perform the operation of the data processing unit to be executed when its functions are executed by the processor 11. It can also be stated that these programs cause the computer to execute various processes performed by the data processing unit.

The data processing unit may be realized by dedicated hardware. The dedicated hardware is, as a specific example, a single circuit, a composite circuit, a programmed processor, parallel programmed processors, an application specific integrated circuit (ASIC), a field programmable gate array (FPGA), or a combination of these. Part of the data processing unit may be realized by the dedicated hardware, and the rest may be realized by the processor 11 and the memory 12.

A procedure for the operation of the monitoring apparatus is equivalent to a monitoring method. A program that realizes the operation of the monitoring apparatus is equivalent to a monitoring program.

The monitoring program may be recorded in a computer readable non-volatile recording medium. The non-volatile recording medium is, as a specific example, an optical disc or a flash memory. The monitoring program may be provided as a program product.

The hardware configuration of the network device 200 may be substantially the same as the hardware configuration of the network monitoring apparatus 100.

### *** Description of Operation ***

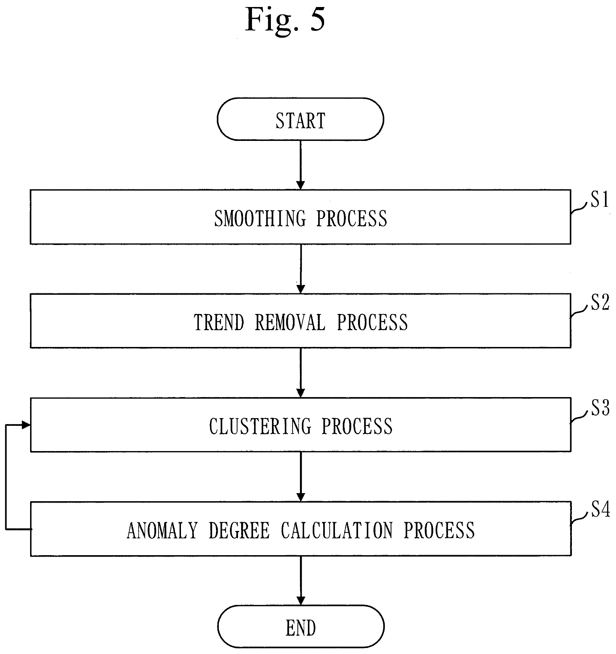

Fig. 5 illustrates an example of a processing flow of the monitoring data processing unit 130. Using Fig. 5, the processing flow of the monitoring data processing unit 130 will be described.

### (Step S1: Smoothing process)

The preprocessing unit 131 smoothes monitoring data, which is time series data, according to the smoothing window size specified by the hyperparameter search unit 136. At this time, the preprocessing unit 131 uses an exponential moving average, as a specific example. The smoothing window size is a hyperparameter.

The purpose of this process is to improve the robustness against periodic fluctuations and amplitude fluctuations of time series data.

### (Step S2: Trend removal process)

The preprocessing unit 131 calculates a difference between each pair of sequential pieces of data in a time series to generate a difference series. The generated difference series corresponds to preprocessed data. The preprocessing unit 131 performs this process on the time series data smoothed in step S1.

If there is a trend in the monitoring data, the accuracy of the clustering process in step S3 will be reduced. Therefore, this process removes the trend from the monitoring data.

### (Step S3: Clustering process)

The learning unit 132 generates a new cluster by clustering a partial time series of the preprocessed data generated in step S2 according to the partial time series size and the number of clusters specified by the hyperparameter search unit 136. The partial time series size and the number of clusters are hyperparameters.

The learning unit 132 includes data indicating the generated new cluster in the anomaly detection model 133.

### (Step S4: Anomaly degree calculation process)

When there are existing clusters, the anomaly degree calculation unit 134 refers to the anomaly detection model 133 each time a new cluster is generated in step S3, and calculates the distance between the center of the generated new cluster and the center of each of all the existing clusters, and determines the minimum distance among the calculated distances to be an anomaly degree corresponding to the new cluster.

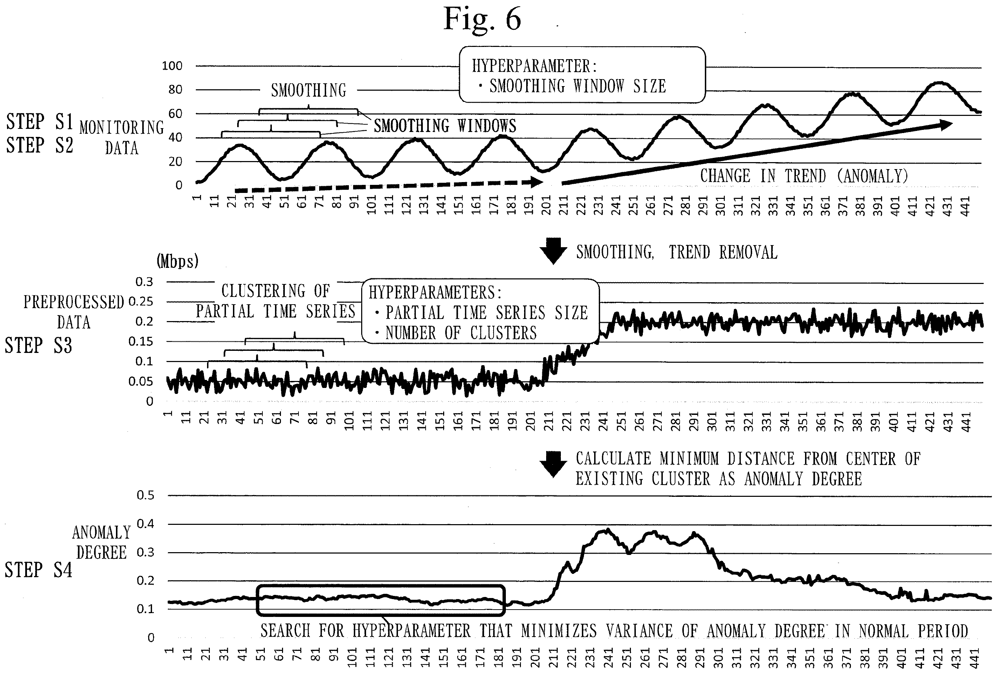

Fig. 6 illustrates a specific example of a processing flow for calculating an anomaly degree of a reception rate included in monitoring data, as a specific example of the processing flow indicated in Fig. 5. In this example, the hyperparameter search unit 136 performs the processes of the steps indicated in Fig. 5 to search for hyperparameters that minimize the variance of the anomaly degree in the normal period. Specifically, the hyperparameter search unit 136 searches for an optimal partial time series size and an optimal number of clusters. In this example, the normal period is the period enclosed in a frame within the period indicated by the graph corresponding to step S4.

Each piece of data may be discrete data. The hyperparameter search unit 136 may search for an optimal cluster division criterion instead of an optimal number of clusters.

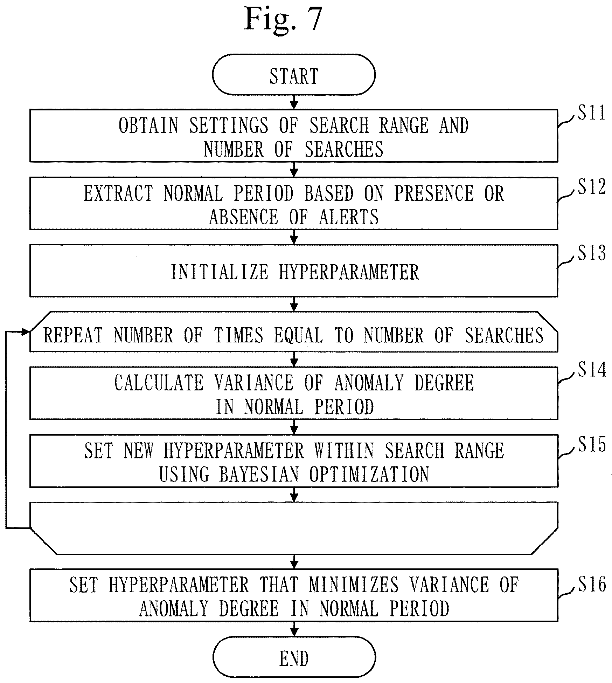

Fig. 7 illustrates an example of a processing flow in a case where the hyperparameter search unit 136 uses Bayesian optimization to search for a hyperparameter that minimizes the variance of the anomaly degree in the normal period. Using Fig. 7, the processing flow of the hyperparameter search unit 136 will be described.

### (Step S11)

The hyperparameter search unit 136 obtains settings of the search range and the number of searches from the user input unit 140.

### (Step S12)

The hyperparameter search unit 136 extracts the normal period from the period indicated by the monitoring data based on the presence or absence of an alert.

The hyperparameter search unit 136 may use the normal period extracted by the evaluation index calculation unit 135.

### (Step S13)

The hyperparameter search unit 136 initializes the hyperparameter.

Then, the hyperparameter search unit 136 repeats step S14 and step S15 the number of times equal to the number of searches.

### (Step S14)

The hyperparameter search unit 136 calculates the variance of the anomaly degree in the normal period.

### (Step S15)

The hyperparameter search unit 136 sets a new hyperparameter within the search range using Bayesian optimization.

### (Step S16)

The hyperparameter search unit 136 sets the hyperparameter finally set in step S15 as the hyperparameter that minimizes the variance of the anomaly degree in the normal period.

### *** Description of Effects of Embodiment 1 ***

As described above, according to this embodiment, the hyperparameters of the anomaly detection model 133 are updated based on the anomaly degree corresponding to the distance between clusters. Thus, according to this embodiment, the hyperparameters of the anomaly detection model 133 can be automatically updated using an index that is not based on correct labels. Therefore, according to this embodiment, it is possible to reduce the manpower required to update an anomaly detection model after the start of operation.

### *** Other Configurations ***

### <Variation 1>

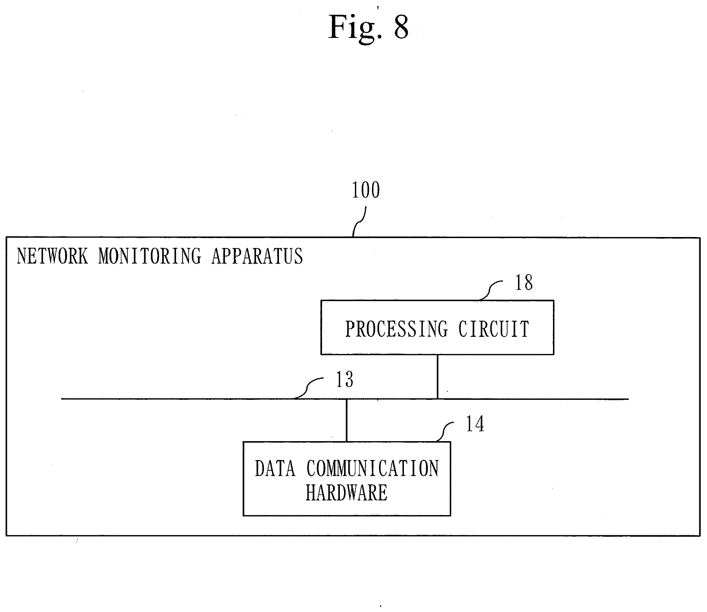

Fig. 8 illustrates an example of the hardware configuration of the network monitoring apparatus 100 according to this variation.

The network monitoring apparatus 100 includes a processing circuit 18 in place of the processor 11 or in place of the processor 11 and the memory 12.

The processing circuit 18 is hardware that realizes at least part of the units included in the network monitoring apparatus 100.

The processing circuit 18 may be dedicated hardware, or may be a processor that executes programs stored in the memory 12.

When the processing circuit 18 is dedicated hardware, the processing circuit 18 is, as a specific example, a single circuit, a composite circuit, a programmed processor, parallel-programmed processors, an ASIC, an FPGA, or a combination of these.

The network monitoring apparatus 100 may include a plurality of processing circuits as an alternative to the processing circuit 18. The plurality of processing circuits may share the role of the processing circuit 18.

In the network monitoring apparatus 100, some functions may be realized by dedicated hardware, and the remaining functions may be realized by software or firmware.

As a specific example, the processing circuit 18 is realized by hardware, software, firmware, or a combination of these.

The processor 11, the memory 12, and the processing circuit 18 are collectively referred to as "processing circuitry". That is, the functions of the functional components of the network monitoring apparatus 100 are realized by the processing circuitry.

The network device 200 may have substantially the same configuration as that of this variation. The monitoring apparatus according to other embodiments may have substantially the same configuration as that of this variation.

### Embodiment 2.

Differences from the embodiment described above will be mainly described below with reference to the drawings.

### *** Description of Configuration ***

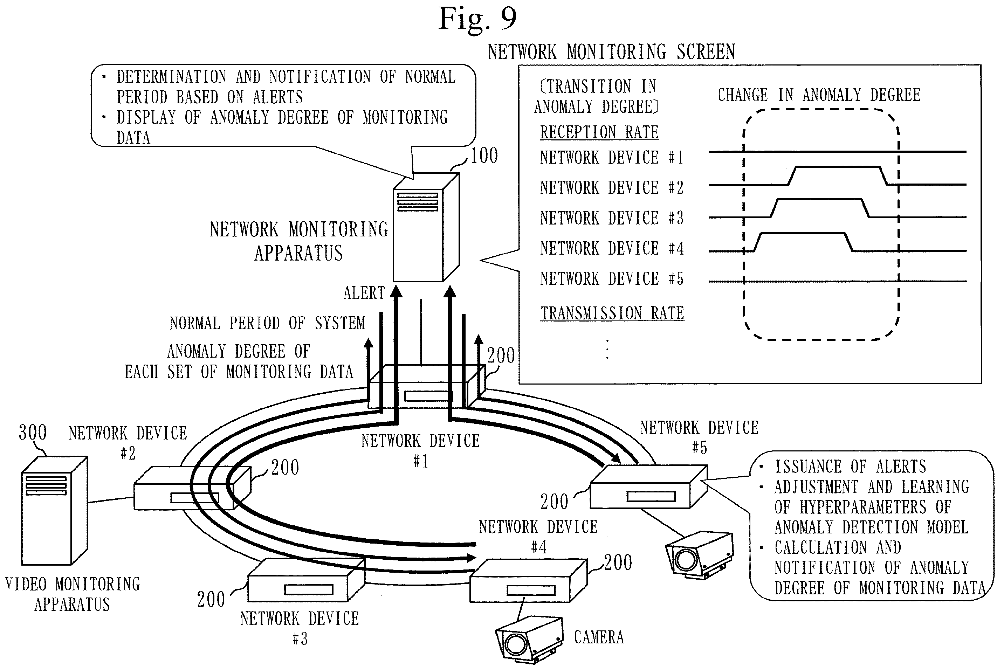

Fig. 9 illustrates an example of the configuration of the network monitoring system 90 according to Embodiment 2. In Embodiment 2, the network device 200 performs learning of an anomaly detection model 233, adjustment of hyperparameters of the anomaly detection model 233, and calculation of an anomaly degree of monitoring data. Each network device 200 issues an alert to the network monitoring apparatus 100 when a failure occurs.

The network monitoring system 90 includes a plurality of network devices 200. When each of the plurality of network devices 200 is regarded as a target network device, each process is executed in the target network device with each of the plurality of network devices 200 as a target device. The monitoring data corresponding to the target device is data indicating behavior of the target device.

The network monitoring apparatus 100 determines a period during which no alert has been received from any of the network devices 200 as a normal period, and notifies each network device 200 of information indicating the determined normal period.

As a specific example, each network device 200 determines hyperparameters of the anomaly detection model 233 by searching for hyperparameters that minimize the average and variance of the anomaly degree of monitoring data in the normal period notified from the network monitoring apparatus 100. The anomaly degree of each set of monitoring data calculated by each network device 200 is notified to the network monitoring apparatus 100, and is displayed on the screen included in the network monitoring apparatus 100.

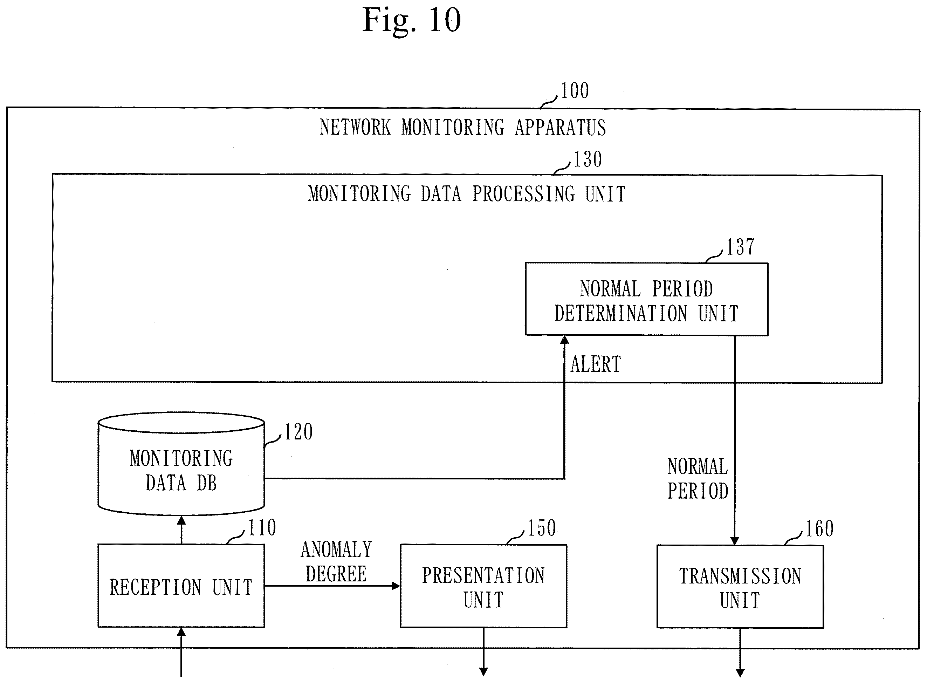

Fig. 10 illustrates an example of the functional configuration of the network monitoring apparatus 100 according to Embodiment 2. As illustrated in Fig. 10, the network monitoring apparatus 100 includes the reception unit 110, the monitoring data DB 120, the monitoring data processing unit 130, the presentation unit 150, and a transmission unit 160.

The monitoring data processing unit 130 according to Embodiment 2 includes a normal period determination unit 137.

The normal period determination unit 137 determines a continuous period in which no alert has been received from any of the network devices 200 as a normal period based on alert information indicated by data stored in the monitoring data DB 120, and notifies each network device 200 of information indicating the determined normal period via the transmission unit 160.

The reception unit 110 according to Embodiment 2 receives information indicating the anomaly degree from each network device 200, and stores the received information in the monitoring data DB 120.

The presentation unit 150 displays the anomaly degree for each set of monitoring data.

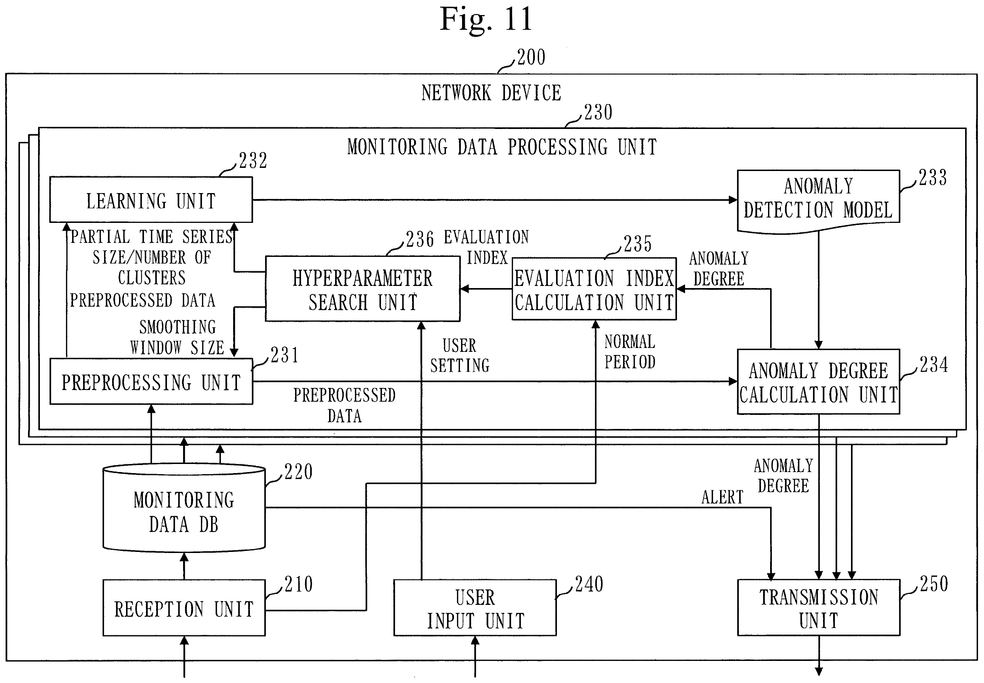

Fig. 11 illustrates an example of the functional configuration of the network device 200 according to Embodiment 2.

As illustrated in Fig. 11, the network device 200 includes a reception unit 210, a monitoring data DB 220, a monitoring data processing unit 230, a user input unit 240, and a transmission unit 250.

The reception unit 210 receives information indicating the normal period from the network monitoring apparatus 100, and passes the received information indicating the normal period to an evaluation index calculation unit 235.

The monitoring data DB 220 is equivalent to the monitoring data DB 120.

The monitoring data processing unit 230 includes a preprocessing unit 231, a learning unit 232, an anomaly detection model 233, an anomaly degree calculation unit 234, the evaluation index calculation unit 235, and a hyperparameter search unit 236.

The preprocessing unit 231 is equivalent to the preprocessing unit 131.

The learning unit 232 is equivalent to the learning unit 132.

The anomaly detection model 233 is equivalent to the anomaly detection model 133.

The anomaly degree calculation unit 234 is equivalent to the anomaly degree calculation unit 134.

The evaluation index calculation unit 235 is equivalent to the evaluation index calculation unit 135.

The hyperparameter search unit 236 is equivalent to the hyperparameter search unit 136.

The user input unit 240 is equivalent to the user input unit 140.

The transmission unit 250 transmits, to the network monitoring apparatus 100, data indicating an alert corresponding to a failure detected in the network device 200 including the transmission unit 250 and data indicating the anomaly degree calculated by the network device 200.

### *** Description of Effects of Embodiment 2 ***

As described above, according to this embodiment, the network device 200 can perform learning of the anomaly detection model 233, adjustment of hyperparameters of the anomaly detection model 233, and calculation of the anomaly degree of monitoring data.

Calculating the average and variance of the anomaly degree, which are used as the evaluation index in adjusting hyperparameters, is a lightweight process. Therefore, an edge device such as the network device 200 can perform an anomaly degree calculation process.

### Embodiment 3.

Differences from the embodiments described above will be mainly described below with reference to the drawings.

### *** Description of Configuration ***

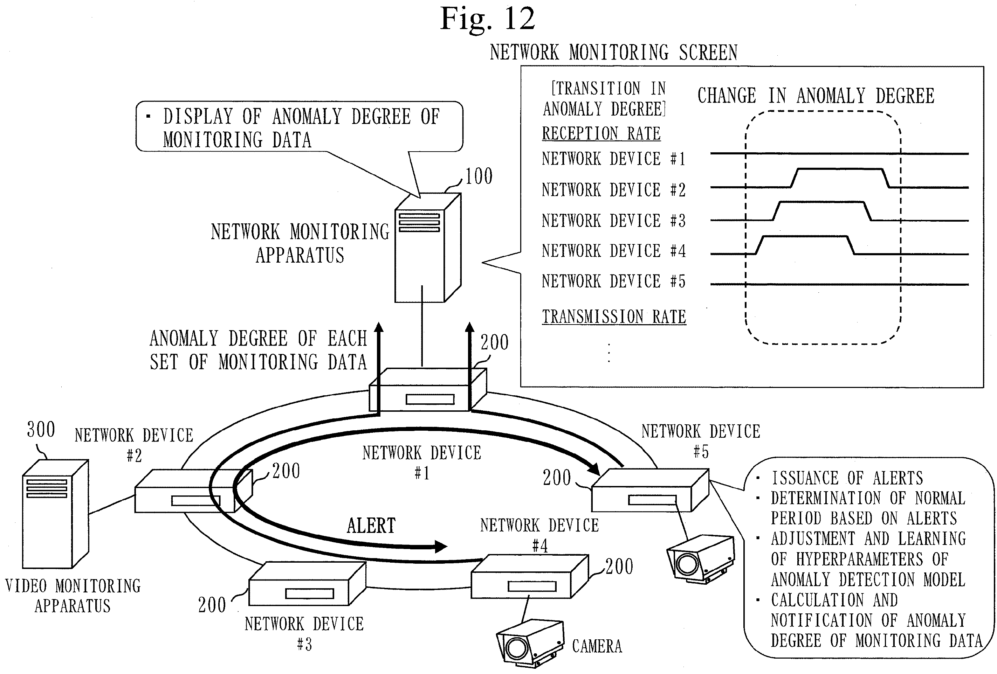

Fig. 12 illustrates an example of the configuration of the network monitoring system 90 according to Embodiment 3.

In Embodiment 3, the network monitoring apparatus 100 only performs display of the anomaly degree received from each network device 200. The network device 200 performs determination of a normal period based on alerts, learning of the anomaly detection model 233, adjustment of hyperparameters of the anomaly detection model 233, and calculation of the anomaly degree of monitoring data. If a failure occurs in each network device 200, each network device 200 issues an alert to all the other network devices 200 or one or more network devices 200.

As a specific example, each network device 200 determines a period during which no alert has been received from any of the other network devices 200 and no failure has been detected in the network device 200 itself as a normal period, and determines hyperparameters of the anomaly detection model 233 by searching for hyperparameters that minimize the average and variance of the anomaly degree of monitoring data in the determined normal period.

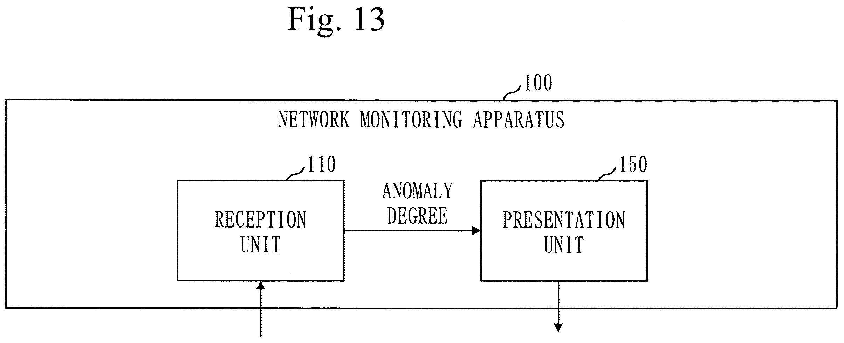

Fig. 13 illustrates an example of the functional configuration of the network monitoring apparatus 100 according to Embodiment 3. As illustrated in Fig. 13, the network monitoring apparatus 100 includes the reception unit 110 and the presentation unit 150.

The reception unit 110 according to Embodiment 3 receives information indicating the anomaly degree from each network device 200.

The presentation unit 150 according to Embodiment 3 displays the anomaly degree for each set of monitoring data.

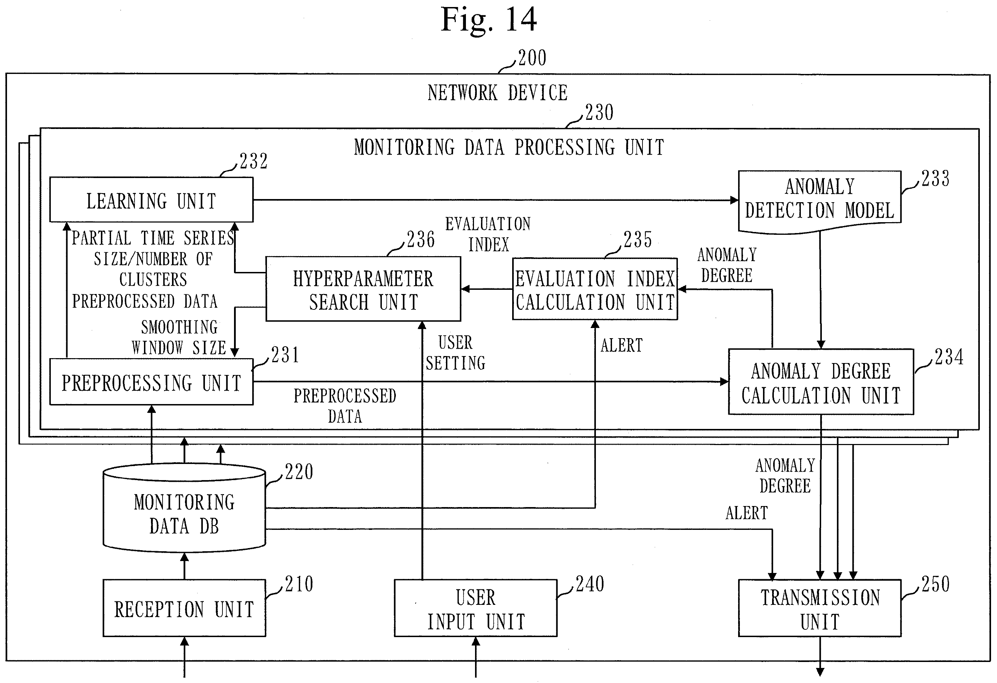

Fig. 14 illustrates an example of the functional configuration of the network device 200 according to Embodiment 3. The functional constituent units included in the network device 200 according to Embodiment 3 are substantially the same as the functional constituent units included in the network device 200 according to Embodiment 2.

The evaluation index calculation unit 235 according to Embodiment 3 is equivalent to the evaluation index calculation unit 135.

The transmission unit 250 according to Embodiment 3 transmits information indicating an alert corresponding to a failure detected by the network device 200 including the transmission unit 250 to the other network devices 200, and transmits information indicating the anomaly degree calculated by the network device 200 including the transmission unit 250 to the network monitoring apparatus 100.

### *** Description of Effects of Embodiment 3 ***

As described above, according to this embodiment, the network device 200 can perform determination a normal period based on alerts, learning of the anomaly detection model 233, adjustment of hyperparameters of the anomaly detection model 233, and calculation of the anomaly degree of monitoring data.

### *** Other Embodiments***

The embodiments described above can be freely combined, or any component of each embodiment can be modified. Alternatively, any component in each embodiment can be omitted.

The embodiments are not limited to those indicated in Embodiments 1 to 3, and various changes can be made as necessary. The procedures described using flowcharts or the like may be appropriately changed.

### Reference Signs List

11: processor; 12: memory; 13: bus; 14: data communication hardware; 18: processing circuit; 90: network monitoring system; 100: network monitoring apparatus; 110: reception unit; 120: monitoring data DB; 130: monitoring data processing unit; 131: preprocessing unit; 132: learning unit; 133: anomaly detection model; 134: anomaly degree calculation unit; 135: evaluation index calculation unit; 136: hyperparameter search unit; 137: normal period determination unit; 140: user input unit; 150: presentation unit; 160: transmission unit; 200: network device; 210: reception unit; 220: monitoring data DB; 230: monitoring data processing unit; 231: preprocessing unit; 232: learning unit; 233: anomaly detection model; 234: anomaly degree calculation unit; 235: evaluation index calculation unit; 236: hyperparameter search unit; 240: user input unit; 250: transmission unit; 300: video monitoring apparatus.

## Claims

1. A monitoring apparatus comprising:
a learning unit to perform clustering on monitoring data, which is time series data corresponding to a target device, according to a first hyperparameter, and when one or more clusters corresponding to one or more pieces of partial time series data included in the monitoring data have been generated as one or more existing clusters, generate, as a new cluster, a cluster corresponding to partial time series data including data that is more recent in a time series than data included in partial time series data corresponding to any of the one or more existing clusters among the monitoring data;
an anomaly degree calculation unit to calculate an anomaly degree corresponding to the new cluster based on a distance between the new cluster and the one or more existing clusters; and
a hyperparameter search unit to search for the first parameter based on an evaluation index when an anomaly degree corresponding to each piece of partial time series data included in the monitoring data has been calculated, the evaluation index being an index that corresponds to the anomaly degree corresponding to each piece of partial time series data and corresponds to a normal period, which is a continuous period during which no anomaly has been detected in the target device.

2. The monitoring apparatus according to claim 1,
wherein the anomaly degree corresponding to the new cluster is a value indicating the distance between the new cluster and the one or more existing clusters, and
wherein the distance between the new cluster and the one or more existing clusters is a distance between the new cluster and an existing cluster closest to the new cluster among the one or more existing clusters.

3. The monitoring apparatus according to claim 1 or 2,
wherein the learning unit generates the new cluster using preprocessed data, which is data generated by performing preprocessing on the monitoring data using a second hyperparameter, and
wherein the hyperparameter search unit searches for the second hyperparameter based on the evaluation index.

4. The monitoring apparatus according to claim 3,
wherein the preprocessing is composed of a smoothing process of smoothing the monitoring data, and
wherein the second hyperparameter indicates a smoothing window size in the smoothing process.

5. The monitoring apparatus according to claim 3 or 4,
wherein the preprocessing is composed of a trend removal process of removing a trend in the monitoring data.

6. The monitoring apparatus according to any one of claims 1 to 5,
wherein the first hyperparameter indicates at least one of a size of partial time series data and a parameter related to division into clusters.

7. The monitoring apparatus according to claim 6,
wherein the parameter related to division into clusters indicates at least one of the number of clusters and a cluster division criterion.

8. The monitoring apparatus according to any one of claims 1 to 7,
wherein the evaluation index is composed of at least one of an average and a variance of an anomaly degree in the normal period.

9. A network monitoring system comprising a plurality of network devices, each network device of the plurality of network devices being the monitoring apparatus according to any one of claims 1 to 8,
wherein when each network device of the plurality of network devices is regarded as a target network device, each network device of the plurality of network devices is regarded as the target device in the target network device, and
wherein monitoring data corresponding to the target device is data indicating behavior of the target device.

10. A monitoring method comprising:
performing clustering on monitoring data, which is time series data corresponding to a target device, according to a first hyperparameter, and when one or more clusters corresponding to one or more pieces of partial time series data included in the monitoring data have been generated as one or more existing clusters, generating, as a new cluster, a cluster corresponding to partial time series data including data that is more recent in a time series than data included in partial time series data corresponding to any of the one or more existing clusters among the monitoring data, by a computer;
calculating an anomaly degree corresponding to the new cluster based on a distance between the new cluster and the one or more existing clusters, by the computer; and
searching for the first parameter based on an evaluation index when an anomaly degree corresponding to each piece of partial time series data included in the monitoring data has been calculated, the evaluation index being an index that corresponds to the anomaly degree corresponding to each piece of partial time series data and corresponds to a normal period, which is a continuous period during which no anomaly has been detected in the target device, by the computer.

11. A monitoring program that causes a monitoring apparatus, which is a computer, to execute:
a learning process of performing clustering on monitoring data, which is time series data corresponding to a target device, according to a first hyperparameter, and when one or more clusters corresponding to one or more pieces of partial time series data included in the monitoring data have been generated as one or more existing clusters, generating, as a new cluster, a cluster corresponding to partial time series data including data that is more recent in a time series than data included in partial time series data corresponding to any of the one or more existing clusters among the monitoring data;
an anomaly degree calculation process of calculating an anomaly degree corresponding to the new cluster based on a distance between the new cluster and the one or more existing clusters; and
a hyperparameter search process of searching for the first parameter based on an evaluation index when an anomaly degree corresponding to each piece of partial time series data included in the monitoring data has been calculated, the evaluation index being an index that corresponds to the anomaly degree corresponding to each piece of partial time series data and corresponds to a normal period, which is a continuous period during which no anomaly has been detected in the target device.
